# EUROPEAN PATENT APPLICATION

(11) **EP 2 206 589 A1**
(43) Date of publication of application: **14.07.2010**
(21) Application number: 10150676.4
(22) Date of filing: 13.01.2010
(51) Int. Cl.: B27K 3/15, B27N 7/00, C08G 18/72, C09D 175/04

(54) **Method for covering a composite lignocellulose element**

(30) Priority: 13.01.2009 NL 2002414
(71) Applicant: Drywood Coatings B.V., 7547 SK Enschede (NL)
(72) Inventor: Van de Velde, Barend, 6823 MV, Arnhem (NL); Nienhuis, Jan Geerhard, 6701 BW, Wageningen (NL); de Meijer, Marinus, 6821 LZ, Arnhem (NL)
(74) Representative: Hatzmann, Martin

(57) **Abstract**

The invention relates to rendering composite lignocellulose elements, such as MDF or HFD board, better moisture-proof, and especially with such elements in otherwise worked condition, having essentially obtained the dimension and shape in which they are to be used. The invention provides a primer comprising a polyol or a polyamine and a di- or trifunctional polyisocyanate, and a method in which the fiber element primed with the primer is further finished with a waterborne coating layer.

## Description

The invention relates to a method for coating a composite lignocellulose element, such as a medium density fiber board (MDF board) or a high density fiber board (HDF board), chipboard, plywood, or oriented strandboard (OSB board) with a water-borne coating layer.

Composite lignocellulose elements generally comprise veneers, flakes, chips and/or fibers of lignocellulose material, especially wood, compressed with a binding agent such as a urea formaldehyde glue, melamine-urea-formaldehyde glue, phenol formaldehyde or polyisocyanates.

A well known problem with these elements is that they are sensitive to moisture, with uptake of moisture resulting in swelling. There are methods of rendering the fiber element less moisture-sensitive, for example through impregnation with a resin that reduces the water-absorbing capacity of the element. References in this connection are, for example, EP 1 372 920, EP 107 155, and US 6,136,408. References in which the lignocellulose element does not concern a fiber element but solid wood are, for example, GB 1 256 542 and US 2006/0233964.

A drawback thereof is that the impregnation cannot be carried out by the average end user, because equipment is needed for immersion and for carrying out the thermal hardening. As a consequence, this technique is only suitable for fiber elements that are treated *ex works*, and not for use after the normally needed carpenter's working operations (milling, sawing, etc.), which give the fiber element the size and shape desired for the eventual application. This has as a result that it is virtually inevitable that in the eventual application the (then worked) material will have exposed edges (as at points where the element has been sawn through) which will constitute weak spots as regards resistance to moisture and swelling.

WO 2008/027390 concerns another end treatment in the manufacture of porous fiber materials, whereby, in a porous fiber material a foaming polymeric sealing layer (sealant) is created by allowing a sealing composition to react with the moisture present in the material, essentially under foaming conditions.

Generating a foam layer is undesirable in obtaining a fine finish of fiber elements (which are used, for example, for doors). Moreover, foaming in a sealing layer is undesirable in the formation of a barrier against transport of moisture. WO 2008/027390 states that the foam layer is moisture-resistant. This relates to the resistance of the layer against degradation under the influence of moisture. This does not alter the fact that foam in the layer has an adverse influence on transport of moisture through the layer under the influence of diffusion or capillary moisture transport.

WO 2008/027390 furthermore proceeds from a form-defining method by means of pressing prior to the provision of the sealing layer, but further working operations are carried out after the provision of the sealing layer. This in turn can result in exposure of untreated edges.

In another method of reducing moisture sensitivity of composite lignocellulose elements, the element is provided with water-repellent waxes, so that the capillary uptake of water in liquid form is reduced. The waxes have no effect on swelling of the fiber.

Moreover, it holds that the water-repellent waxes are especially effective with a compacted surface such as this is normally present in composite lignocellulose elements.

Here, too, it holds that working the element will lead to the compacted surface being interrupted so that moisture sensitive spots are formed after all.

An additional problem arises through the coating of the fiber element with a waterborne coating composition. As is well known, in many countries the use of solvent-based coating composition is hardly, if at all, allowed. Waterborne coating compositions comprise surfactants which reduce the water-repellent capacity of the board.

Moreover, it is a problem that in fiber elements that in themselves are quite moisture-resistant, moisture resistance may be locally undone, for example as a consequence of working or as a result of damage. This leads to local swelling. In worked and finished fiber elements this drawback is compounded because working and finish will normally be intended for a desired exterior effect. Moreover, in this way, any damage to the paint is much more serious than just the damage to the layer of paint itself.

US 6,576,175 addresses the desire of coating composite lignocellulose elements with a waterborne finishing layer, and it is indicated that the associated problems may be reduced by applying a "tempering" oil. It is indicated as an associated drawback that it is necessary to cure this at an elevated temperature. The solution suggested concerns the combination of the tempering oil with a catalyzing dryer, or a low-molecular isocyanate resin. Ans essential part of the proposed method, however, is that this combined composition is applied to an (ex production) still warm element, and that curing of the oil takes place in a curing chamber for the necessary time. This also concerns a process that is hardly if at all feasible outside manufacturing circumstances, as at the end user of the fiber element.

It is desirable to provide a method which enables the end user of a composite lignocellulose element to treat the element such that it becomes better moisture proof. Especially, it is desirable to provide a method which enables the end user to treat the element such that it can be coated with a waterborne finishing layer, while reducing, and preferably preventing, the above-indicated problems. More particularly, it is desirable, if moreover this method can be applied after the fiber element has undergone such working operations, as milling and sawing, as to have essentially its definitive size and shape.

An object of the invention is to better meet the above-mentioned wishes. To that end, the invention, in an aspect thereof, resides in a method for coating a composite lignocellulose element with a waterborne coating layer (a), wherein prior to applying the coating layer (a) a primer (b) is applied, and wherein the primer (b) is formed by a coating composition comprising a polyfunctional isocyanate (c) and a polyfunctional compound (d) reactive therewith, preferably a polyol (e) or a polyamine (f).

In another aspect, the invention concerns the use of a coating system comprising a polyfunctional isocyanate and a polyol or polyamine reactive therewith as primer on a composite lignocellulose element, in particular wherein the primer is applied and hardened under essentially non-foaming conditions.

As a non-binding theory, the inventors believe that it essentially contributes to the solution of the above-mentioned problems if a primer (b) is used that is water-free (anhydrous). With reference to the prevention of the above-mentioned moisture problems especially in external use, the invention also relates to the use, in the finishing of a lignocellulose element for external use, of an essentially water-free primer for a waterborne coating layer.

It is at present not possible in practice to simply avoid water, since the use of solvents is limited by law. In this connection, the invention concerns a solvent-free two component primer (or priming paint, undercoat) composition (b) comprising:
(c) a di- or tri-functional isocyanate. There is a preference for an aliphatic type because this reacts less fast with moisture so that foaming (as a result of CO₂ formation under the influence of reaction with water) remains absent. The viscosity at 23°C should be low, preferably lower than 4000 mPas.
(d) a polyfunctional compound having reactivity with respect to the polyisocyanate, preferably selected from the group consisting of polyols, polyamines, and compounds having at least two isocyanate-reactive oxygen or nitrogen atoms; the viscosity of the polyfunctional compound is preferably lower than 300 mPas at 23°C.

The polyfunctional compound is preferably a polyol based on (modified) castor oil (ricinus oil). Caster oil consists as to more than 80 percent by weight of triglyceride of ricinoleic acid which contains a hydroxyl group. In the residual 20 % the ricinoleic acid is wholly or partly replaced with acids from the group: oleic acid, linolenic acid, linolic acid, stearic acid, or palmitic acid. Since these acids contain no hydroxyl groups, the reactivity and the crosslinking degree of primer is co-determined by the composition of the castor oil. Another possibility of influencing the reactivity of the castor oil is to partly dehydrate the castor oil. This also makes clear that through purification or modification of the castor oil, the properties mentioned of the primer can be influenced.

Suitable polyols based on modified castor oil are, for example, Albodur 901 VP, Albodur 921 Vp and Albodur 941 (all from Alberdingk Boley) and Veopol 240001 (from Vandeputte).

Other suitable polyols are those that are known as intermediates in the manufacture of binders for alkyd resins. These binders are generally manufactured from phthalic acid anhydride, polyalcohols with three or four functional groups (pentaerythritol, glycerol and trimethylol propane), and fatty acids or oils (triglycerides of fatty acids). Especially, this concerns fatty acids (and the triglycerides thereof), that do not contain more than one unsaturated bond such as oleic acid, or are saturated, such as coconut oil or palm kernel oil. While in the alkyd chemistry mentioned the anhydride leads to the conversion of at least a part of the hydroxyl groups, in the current invention the reaction product of the polyalcohol and the fatty acid or (mono-, di- or tri)-glyceride is useful as polyol for reaction with the polyisocyanate.

Suitable polyols are also those that are supplied by Perstorp Caprolactones (formerly produced by Solvay S.A.), designated as "CAPA® polyols" (based on ring-opening polymerization of ε-caprolactone). Examples of these polyols, in fact polyesters with multiple hydroxyl functionality, are CAPA® diol, CAPA® triol, and CAPA® Tetrol.

Based on the above-indicated CAPA® polyols, for example, polyols can be used having a structure according to formula (1), (2) or (3): 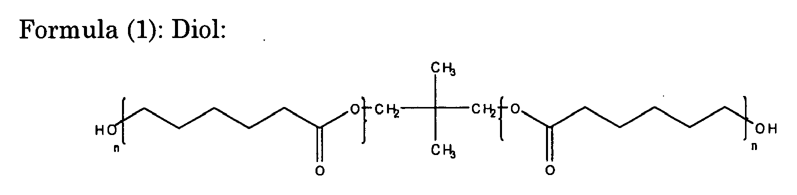 wherein n is an integer from 1 to 15. 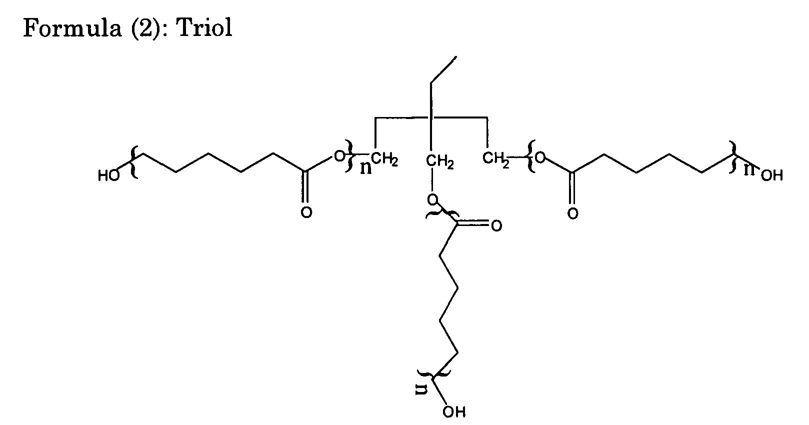 wherein n is an integer from 1 to 10.

Formula (3): Tretol C-(CH₂-(COO(CH₂)₅)ₙOH)₄

wherein n is an integer from 1 to 5.

Other suitable polyols are those that are based on the esterification of adipic acid with a bivalent alcohol, more particularly a bivalent aliphatic alcohol, and especially 1,4-n-butanediol. The resulting adipate polyester has two terminal hydroxyl groups, and is thus a suitable polyol.

Suitable polyamines are, for example, polyaspartics (such as a dimer of aspartic acid - or ester thereof - which comprises two secondary amino groups). Polyaspartic coatings are supplied, for example, by Bayer AG under the brand names: Desmophen NH 1220, NH 1420 and NH 1520.

Suitable polyfunctional isocyanates are especially di- and trifunctional isocyanates based on oligomers of, for example, toluene diisocyanate (TDI), diisocyanate diphenyl methane (MDI), hexamethylene diisocyanate (HDI), isophorone diisocyanate (IPDI), diisocyanate dicyclohexylmethane (HMDI), xylylene diisocyanate (XDI), trimethylhexane diisocyanate (TMHDI) or tetramethyl xylylene diisocyanate (TMXDI). Structural formulae of oligomers of such types of isocyanate are described on page 100 of the book Coatings Formulation (2006) by Müller and Poth.

These are especially isocyanates selected from the group consisting of di- and trifunctional aliphatic isocyanates and slow reacting aromatic polyfunctional isocyanates. The term "slow reacting" has a meaning that is familiar to those skilled in the art, as is also apparent from the classification of reactivity of isocyanates as often applied by manufacturers.

Names of commercially available products from this category of isocyanates are, for example, Tolonuate HDT-LV (Rhodia), Desmodur N3300 (Bayer) or Suprasec 2496 (Huntsman). Mixtures of aromatic and/or aliphatic isocyanates may be used, preferably at least a part of the isocyanate is aliphatic, and preferably exclusively aliphatic isocyanate is used.

It is known to react isocyanate groups with compounds comprising isocyanate-reactive groups that comprise oxygen and/or nitrogen. In the case of oxygen, that is, compounds with free hydroxyl groups, the hydroxyl groups react with isocyanate to form a urethane compound. In the case of nitrogen, that is, compounds with primary, secondary or tertiary amino groups, the amino groups react with isocyanate to form a urea compound.

It is desired in the method according to the invention to apply and harden the primer under conditions where foaming is essentially avoided.

Foaming in crosslinking of isocyanate is the result of the following chemical reactions: reaction of isocyanate with water to form a primary amine and carbon dioxide conform reaction equation (i), and the primary amine formed proceeds to react directly with isocyanate to form a urea compound, as in reaction equation (ii).

R-NCO + H₂O → [R-NH-COOH] → R-NH₂ + CO₂ (i)

R-NH₂ + R-NCO → R-NH-CO-NHR (ii)

As indicated above, it is not desirable for the primer in the present invention to obtain essential foaming. A possibility of avoiding this is to choose the composite lignocellulose element such, or to priorly subject it to a drying step such, that there is relatively little free (that is, available for a reaction) water present in it (at most 5 % by weight, preferably at most 3 % by weight and more preferably at most 1 % by weight). Preferably, the water content is zero, but in practice after drying there will still be a water content of 1 % by weight, preferably 0.5 % by weight. In the presence of a low percentage of water, and the more so when this water, through binding to lignocellulose constituents, is poorly accessible as a reactant, the possibility of foaming is taken away as much as possible, by minimizing the formation of carbon dioxide as much as possible.

Instead of starting from an element having a low water content (the water content will then be typically between 5 and 10 % by weight, more particularly 7-9 % by weight), and preferably as a combined measure therewith, an isocyanate will be chosen that is relatively low-reactive with respect to water. As a result of this, also upon the occurrence of the reaction according to reaction equation (i), the subsequent crosslinking (with commensurate viscosity buildup) will not proceed so fast that carbon dioxide formed cannot diffuse to the outside. As long as one is able to avoid inclusion of any carbon dioxide formed as much as possible, essentially no polymer foam will form. Naturally, it is also possible to opt for isocyanate not preferentially reacting with water (preferably in combination with conditions in the composite lignocellulose element that prevent the reactive accessibility of water, or where, as indicated above, water is hardly if at all present).

Another possibility is the use of a polyamine as reactant with the isocyanate. Since the most current amine groups in polyamines have a higher reactivity with isocyanate with respect to the reaction with moisture, the formation of carbon dioxide is avoided in this manner. Polyamines can also be used in combination with polyols in order to influence the reactivity with respect to water.

The reactions occurring in use of isocyanate and polyol or polyamine can also be influenced through the nature and the amount of catalysts.

The reaction between the isocyanate and the polyol or polyamine can take place without this reaction being catalyzed. In many applications, however, it will be advantageous to catalyze the reaction in order to increase the reaction rate or the selectivity between different types of reactions. The influence of catalysts on the reaction rate of isocyanate is further described in the publications "Catalysis in aliphatic isocyanate-alcohol reactions" by Squiller and Rosthauser in Modern Paints and Coatings June 1987 and in "Catalysis of the isocyanate hydroxyl reaction by non-tin catalysts" by Blank, He and Hessell in Progress in Organic Coatings 35 1999 and in "A Selective Catalyst for Two Component Waterborne Polyurethane Coatings" by He, Blank and Picci in Proceedings of the 26th International Waterborne, High-Solids, and Powder Coatings Symposium February 1999.

Examples of suitable catalysts are *inter alia*: dibutyltin dilaurate (DBTL), 1,4-diazobicyclo[2,2,2]-octane (DABCO), complexes of zirconium tetrakis 2,4-pentanedionate, dibutyltin diacetate, dimethyltin dichloride, zinc octoate, magnesium octoate, zirconium octoate, dibutyltin maleate and dibutyltin-bis-o-phenylphenate. Such catalysts can be used alone or in combinations. It is preferred to choose the type and the amount of catalyst such that the reaction between isocyanate and polyol, under the conditions such as they obtain in a composite lignocellulose element, proceeds faster than the reaction with water such as it is present in the composite lignocellulose element.

The best results are achieved with isocyanates of the aliphatic type. These are generally less reactive, and thereby build up viscosity less fast, resulting in a better penetration and less fast inclusion of carbon dioxide (and hence less chance of foaming to which inclusion of carbon dioxide normally leads).

The ratio between the isocyanate and the polyfunctional compound reactive therewith is preferably not stoichiometric but involves an excess (3-50%) of isocyanate. The purpose of this is to also bring about reaction with moisture and hydroxyl groups from wood so that the swelling of wood at the surface diminishes strongly, and preferably remains absent.

In this connection the invention also relates to the use, as primer for a composite lignocellulose element, of an essentially solvent-free two component composition comprising:
(i) a polyol or a polyamine;
(ii) a di or tri-functional isocyanate,
wherein the isocyanate is present in excess, preferably 3-50% with respect to the stoichiometric ratio.

The advantage of a low viscosity is that the primer penetrates well into the composite lignocellulose element. When this is insufficient, the primer stays on the fiber element too much, so that the surface becomes too smooth. This is disadvantageous to the esthetics. Moreover, given a better penetration of the primer (at least, given a lesser amount on the surface), a better adhesion with the subsequent finishing (paint) layers is obtained.

It is also possible to achieve the desired low viscosity on the basis of components that in themselves have too high a viscosity, by the use of reactive diluent. Reactive diluents are known, and comprise reactive compounds that are used as diluting liquid in applying the primer. These compounds thereupon co-react with the reactive constituents in the primer.

The term 'solvent-free' means that the composition contains essentially no solvent. This does not preclude the presence of a small amount of solvent, but preferably this is not more than what is legally allowed, viz. maximally 150 g/L, preferably maximally 100 g/L.

The reaction between the isocyanate and the polyol or polyamine can take place without this reaction being catalyzed. In many applications, however, it will be advantageous to catalyze the reaction in order to increase the reaction rate or the selectivity between different types of reactions. The influence of catalysts on the reaction rate of isocyanate is further described in the publications "Catalysis in aliphatic isocyanate-alcohol reactions" by Squiller and Rosthauser in Modern Paints and Coatings June 1987 and in "Catalysis of the isocyanate hydroxyl reaction by non-tin catalysts" by Blank, He and Hessell in Progress in Organic Coatings 35 1999 and in "A Selective Catalyst for Two Component Waterborne Polyurethane Coatings" by He, Blank and Picci in Proceedings of the 26th International Waterborne, High-Solids, and Powder Coatings Symposium February 1999.

The primer according to the invention can be used in a variety of composite lignocellulose elements, such as MDF or HDF boards, OSB board (where OSB stands for "oriented strand board", that is, a board made of oriented wood flakes), chipboard, plywood and solid wood.

The primer is preferably applied to an element suitable for (exterior) use whereby prior to the application of the primer essentially all working operations that determine the shape and size of the element have been carried out. The element may also be composed of combinations of the above-mentioned lignocellulose fiber element, possibly supplemented with other materials. Non-limiting examples of such elements are: doors, facade-filling elements, facade cladding, storages, fencing, buoy parts, roof elements, boarding or screens.

The primer may be applied in different manners, such as spraying, spouting, pouring, brushing or rolling. The preferred manner of application is spraying with the aid of a two component sprayer where the two components are mixed shortly before spraying, this in view of the short storage life (pot life) of the mixture. For hardening, no extra measures (such as high temperature or pressure) are needed. It may be advantageous, though, to heat material to a temperature of preferably 30-60 °C to further lower the viscosity and thereby improve penetration.

The relatively simple application has as an advantage that this technique can be used at end users of fiber elements, so that complete elements (with milled-in features, etc.) can be treated.

After applying the primer, further finishing can take place with one or more coating layers (such as layers of paint). The primer according to the invention is eminently suitable for further finishing with coating compositions based on water dilutable polymers. These are, for example, compositions based on vinyl acetates, acrylates, alkyd resins or polyurethanes or combinations thereof and may further be assumed to be known to those skilled in the art.

The primer composition according to the invention can contain conventional additives, such as fillers (for example, calcium carbonate, talcum, synthetic or natural silica), pigments or dyes, dispersion agents, humidifiers, defoamers or deaerating agents, chemical or physical dryers, rheology modifiers, stabilizers, UV absorbers, biocides and softeners.

It is noted that the chemistry of polyfunctional isocyanates, and the available methods to react these with polyfunctional compounds such as polyols or polyamines are familiar to those skilled in the art. The combinations of polyisocyanates and polyols or polyamines to be used therewith can often be made on the basis of commercially available compounds. Examples thereof have been designated hereinabove with brand names. These brand names have a meaning familiar to those skilled in the art, and the associated structures are known in the literature, as far as they can be given. Especially where the polyols are concerned, it holds that a precise structure cannot always be given because it is not divulged by the manufacturer.

In addition to the earlier-given preferred polyols of the Albodur® and CAPA® series, naturally all kinds of further polyols may be used. Thus, a suitable polyol is, for example, the main component of castor oil. This is the triglyceride of ricinoleic acid.

The invention is elucidated below in and by the following non-limiting examples and the associated drawing.

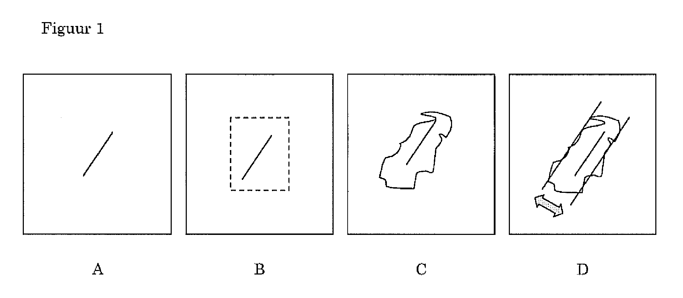

Figure 1 schematically shows the performance, in steps (A)-(D), of the scratch and swelling test described in the Examples.

### EXAMPLE 1

MDF boards based on coniferous wood glued with a melamine-urea-formaldehyde binder with a specific mass of 880 - 940 kg/m³ and a thickness of 3 mm, a length of 298 mm and a width of 210 mm, were treated as to a half of the surface with a primer of a composition as listed in Table 1. The basic component consists of basic materials 1-4 which have been priorly mixed through vigorous stirring under a mixer. The hardener consists of basic material 5 and is added in a later stage. The excess of isocyanate in this formulation is 5 % with respect to the stoichiometric ratio.

The basic component and the hardener were adjusted by means of a so-called airless pump to a pressure of 120 bar, then mixed in the ratio as listed in Table 1 and, after mixing, heated to a temperature of 40°C. Thereupon, the primer was sprayed through a nozzle having an aperture of 0.325 mm and a spray angle of 40°. In this way, between 100 and 120 g/m² of the primer was applied to the MDF.

**Table 1 Composition of the primer in parts by weight**

| | **Basic material (basis)** | **Description** | **Part by weight** |
|---|---|---|---|
| 1 | Albodur 941 ex Alberdink Boley | Modified castor oil (polyol) | 4650 |
| 2 | Dimethyl sulfoxide ex Arkema | Diluent | 300 |
| 3 | Dabco T12 ex Air Products | DBTL catalyst | 1.9 |
| 4 | Dabco 33LV ex Air Products | DABCO catalyst | 11.7 |
| 5 | Tolonuate HDT LV2 ex Rhodia | Aliphatic trifunctional isocyanate | 5030 |
| | | | 10000 |

After drying at room temperature for 6 hours, the whole board, comprising the parts with as well as without primer, was finished with 4 white pigmented coating compositions based on essentially different waterborne binding agents in a dry layer thickness of 100 µm.

After the coating composition had dried at room temperature for 2 days, the next test (in the following denoted as scratch and swelling test) was performed.

With a sharp knife, there is made a diagonal incision with a length of approximately 60 mm to a depth of approximately 2 mm through the coating composition and primer into the MDF (step A in Fig. 1). The incision is covered with filtering paper that widely overlaps the incision and is completely saturated with water and is kept wet for the duration of the loading time (step B in Fig. 1). After 16 hours of water loading, filtering paper is removed and the surface is wiped dry. Immediately after this, the swelling around the incision is visually assessed under floodlight and marked off with a marker pen (step C in Fig. 1). With two straight lines parallel to incision, the average swelling is marked off and the distance between the straight lines is measured (step D in Fig. 1). The distance between the lines is the measure for occurrence of swelling around a damage. Table 2 summarizes the results of this test.

**Table 2 Results of scratch and swelling test with and without primer**

| | **Swelling around damage** | |
|---|---|---|
| **Type of coating composition** | **Without primer** | **With primer** |
| Vinyl dispersion | 22 to 84 mm | 1 to 4 mm |
| Self-crosslinking acrylate dispersion | 24 to 34 mm | 1 mm |
| Alkyd emulsion | 6 to 72 mm | 1 to 4 mm |
| Polyurethane dispersion | 18 to 56 mm | 1 to 3 mm |

The results show that regardless of the composition of the waterborne coating layer the MDF swells up around a damage. After application of the primer, there occurs no swelling or only very slight swelling. This effect is independent of the nature of the coating layer.

### EXAMPLE 2

Of the lignocellulose fiber elements as described in Table 3, five-fold paired samples were made having a width of 70 mm and a length of 100 mm. One half was treated all around, including the saw edges, with a primer as described in Example 1. All samples were finished all around with a white pigmented waterborne coating layer based on self-crosslinking acrylate dispersion in a dry layer thickness of 100 µm.

**Table 3 Description of lignocellulose fiber elements**

| **Description** | **Specific mass (kg/m³)** | **Thickness (mm)** |
|---|---|---|
| High-density fiber board (HDF) | 890 | 4 |
| Chipboard | 700 | 8 |
| Birch plywood (5-ply) | 410 | 5.5 |
| Hardboard | 990 | 3 |
| Okoumé plywood (3-ply) | 650 | 5 |

After 1 week of drying after application of the coating layer, the panels were weighed (accuracy 0.01 g) and the thickness of the panels was determined (with accuracy ± 0.03 mm). The samples were thereupon submerged in tap water and the weight increase and the thickness increase were measured after 1 and 3 days. These increases were expressed as percentages of the initial value. Table 4 shows the average percent weight increase and thickness increase.

**Table 4 Weight increase and thickness swelling of various types of lignocellulose materials with and without primer after 1 and 3 days of moisture loading.**

| | **Weight increase [%]** | | | | **Thickness increase [%]** | | | |
|---|---|---|---|---|---|---|---|---|
| | **With primer** | | **Without primer** | | **With primer** | | **Without primer** | |
| **Description** | **1 day** | **3 days** | **1 day** | **3 days** | **1 day** | **3 days** | **1 day** | **3 days** |
| HDF | 1.9 | 3.4 | 12.3 | 24.0 | 5.5 | 6.0 | 12.3 | 23.2 |
| Chipboard | 7.4 | 19.4 | 30.0 | 36.1 | 0.9 | 5.0 | 9.2 | 16.4 |
| Birch plywood | 6.4 | 6.6 | 20.1 | 28.8 | 0.3 | 1.0 | 1.1 | 2.5 |
| Hardboard | 2.4 | 5.4 | 23.5 | 25.5 | 7.0 | 9.2 | 16.2 | 16.9 |
| Okoumé plywood | 2.2 | 4.1 | 17.3 | 27.5 | 0.0 | 1.0 | 1.0 | 3.2 |

The results show that the weight increase and thickness increase are strongly reduced by the use of the primer.

### EXAMPLE 3

MDF boards based on coniferous wood glued with a melamine-urea-formaldehyde binder with a specific mass of 880 - 940 kg/m³ and a thickness of 3 mm, a length of 298 mm and a width of 210 mm, were treated as to a half of the surface with primers A to E whose composition is listed in Table 5. The basic components were priorly mixed through vigorous stirring under a mixer. The hardener was added in a later stage through vigorous stirring under a mixer. The primers were applied with a brush. The scratch and swelling test was performed in the manner as described in Example 1. After treatment with the primers, the boards were assessed visually for penetration into the board and visually under a microscope at a 40 x magnification for the presence of foam in the surface of the MDF.

**Table 5**

| | **Basic material** **(basis)** | **Description** | **A** | **B** | **C** | **D** | **E** | **F** | **G** | **H** |
|---|---|---|---|---|---|---|---|---|---|---|
| 1 | Albodur 941 ex Alberdink Boley | Modified castor oil (polyol) | 46.5 | | | 51 | 46.5 | | 56.0 | 40.8 |
| | Capa 3022 ex Perstorp | trifunctional caprolactone | | 100 | | | | | | |
| | Capa 2043 ex Perstorp | difunctional caprolactone | | | 100 | | | | | |
| | Desmophen NH 1420 x bayer | Amine-functional polyaspartic ester | | | | | | 61.2 | | 7.1 |
| 2 | Dimethyl sulfoxide ex Arkema | Diluent | 3.0 | | | | 3.0 | | | 3 |
| 3 | Dabco T12 ex Air Products | DBTL catalyst | 0.02 | | | | 0.02 | | | 0.02 |
| 4 | Dabco 33LV ex Air Products | DABCO catalyst | 0.12 | | | | 0.12 | | | 0.12 |
| 5 | Tolonuate HDT LV2 ex Rhodia | Aliphatic trifunctional isocyanate | 50.4 | 192 | 96 | | | | | 49.0 |
| 6 | Desmodur XP 2410 ex Bayer | Aliphatic trifunctional isocyanate | | | | | 50.4 | 38.8 | | |
| 7 | Suprasec 2496 ex Huntsman | Aromatic, trifunctional isocyanate resin | | | | | | | 44.0 | |
| 8 | Tolonate 803 ex Rhodia | Aliphatic trifunctional isocyanate | | | | 152.1 | | | | |
| | | Penetration | G | G | G | G | G | O | O | G |
| | | Excess isocyanate [%] | 5 | 5 | 5 | 5 | 5 | 0 | 0 | 5 |
| | | Foaming in board | not | not | not | not | not | not | not | not |
| | | Viscosity [cP] | 550 | 840 | 440 | 200 | 600 | 460 | 180 | 560 |
| | | Swelling around scratch [mm] | <10 | <10 | <10 | <10 | <10 | <10 | <10 | <10 |

Penetration G = good, > 80% penetration, M = moderate, >20 and <80% penetration, O = insufficient, < 20 % penetration.

From the results, it is apparent that a good protection of the MDF is possible by the use of a primer with different types of polyols and isocyanates.

### EXAMPLE 4

The viscosity of the basic components and of the mixture mixed vigorously under a mixer were measured at rising temperatures from 20 °C to 50 °C. The viscosity was measured with a Brookfield DVIII, with spindle CP 51 at a speed of 60 rpm. The primer, defined in Example 1, was sprayed in the manner as defined in Example 1 with a material temperature of 20°C and 40°C. The effect of the material temperature on the penetration of the formulation in MDF was determined on 9 boards with different composition.

**Table 6 The penetration is classified into three classes:**

| Assessment | Description |
|---|---|
| + | > 80% penetration into the board |
| + / - | 40 to 80% penetration |
| - | < 40% penetration |

**Table 7 Effect of temperature on viscosity [cP]**

| | **Aliphatic trifunctional isocyanate** | **Modified castor oil** **(polyol)** | **Mixture*** |
|---|---|---|---|
| **Temp [°C]** | Tolonuate HDT LV2 ex Rhodia | Albodur 941 ex Alberdink Boley | |
| **20.0** | 630 | 280 | 400 |
| **30.0** | 370 | 160 | 250 |
| **40.0** | 210 | 90 | 170 |
| **50.0** | 120 | 52 | 155 |

| | | | |
|---|---|---|---|
| * mixture consisting of both components with 5% excess isocyanate with respect to the stoichiometric ratio. | | | |

From the measurements, it is apparent that the viscosity of the components and the mixture diminish strongly as a result of the temperature increase.

**Table 8**

| Effect of material temperature on the penetration of the primer in the board. | | | | | | | | | |
|---|---|---|---|---|---|---|---|---|---|
| Board | **A** | **B** | **C** | **D** | **E** | **F** | **G** | **H** | **I** |
| **20°C** | - | + | - | - | - | - | +/- | - | - |
| **40°C** | + | + | + | + | + | + | + | + | + |

From the measurements, it is apparent that the penetration of the primer depends on properties of the MDF. With the formulation chosen the penetration was improved clearly better at 40°C material temperature with respect to 20°C material temperature.

### EXAMPLE 5

MDF boards based on coniferous wood glued with a melamine-urea-formaldehyde binder with a specific mass of 880 - 940 kg/m³ and a thickness of 3 mm, a length of 298 mm and a width of 210 mm, were divided into 3 parts. One part was thereupon redried in an oven at 105 °C and one part was placed in a controlled climate chamber at 23°C and 90% RH until the wood moisture contents as listed in Table 9. The moisture percentage was expressed as (mass wet - mass dry) / mass dry. Mass is understood to mean the mass after 24 hours of drying at 105 °C. Thereupon these boards were treated in the manner as described in Example 1. The results of the width swelling in the scratch and swelling test are summarized in Table 9.

**Table 9**

| **Moisture % in board** | **Width swelling** |
|---|---|
| 0.4 | 1 mm |
| 9 | 1 mm |
| 12.6 | 1 mm |

The results as given in Table 9 show that the effect of the primer on the swelling around a damage is independent of the moisture content of the board prior to the application of the primer.

## Claims

1. A method for coating a composite lignocellulose element with a waterborne coating layer (a), wherein prior to applying the coating layer (a) a primer (b) is applied, and wherein the primer (b) is formed by a coating composition comprising a polyfunctional isocyanate (c) and a polyfunctional compound (d) reactive therewith, preferably a polyol (e) or a polyamine (f).

2. A method according to claim 1, wherein the primer comprises a two component coating composition, wherein the two components consist of the polyol or polyamine and the polyfunctional isocyanate.

3. A method according to claim 1 or 2, wherein the method is carried out on a composite lignocellulose element which has priorly undergone one or more working operations which essentially determine the size and shape for use of the element.

4. A method according to any one of the preceding claims, wherein the polyol is selected from the group consisting of polyols based on (modified) castor oil, polyols based on polymerization of ε-caprolactone, polyols based on adipic acid esters, polyamines and mixtures thereof.

5. A method according to any one of the preceding claims, wherein the isocyanate is selected from the group consisting of di- and trifunctional aliphatic isocyanates and slow reacting aromatic polyfunctional isocyanates.

6. A method according to any one of the preceding claims, wherein the isocyanate is applied in excess, preferably 3-50% with respect to the stoichiometric ratio.

7. A method according to any one of the preceding claims, wherein the primer is applied with the aid of a two component sprayer wherein the two components are mixed within 5 minutes prior to spraying.

8. A method according to claim 7, wherein prior to application the primer in the sprayer is heated to 30-60 °C.

9. Use of a coating system comprising a polyol or a polyamine and a polyfunctional isocyanate as primer on a composite lignocellulose element.

10. Use according to claim 9, of an essentially solvent-free two component composition comprising:
(iii) a polyol or a polyamine;
(iv) a di- or trifunctional isocyanate,
wherein the isocyanate is present in excess, preferably 3-50% with respect to the stoichiometric ratio, as primer in the coating of a composite lignocellulose element.

11. Use according to claim 9 or 10, wherein the polyol has a viscosity of less than 300 mPa.s.

12. Use according to any one of claims 9 to 11, wherein the isocyanate has a viscosity of less than 4000 mPa.s.

13. Use according to any one of claims 9-12, wherein the polyol is selected from the group consisting of polyols based on (modified) castor oil, polyols based on polymerization of ε-caprolactone, polyols based on adipic acid esters, polyamines and mixtures thereof.

14. Use according to any one of claims 9-13, wherein the isocyanate is selected from the group consisting of di- and trifunctional aliphatic isocyanates and slow reacting aromatic polyfunctional isocyanates.

15. Use according to any one of claims 9 to 14, wherein the fiber element has been worked to the extent that it has essentially its definitive size and shape.

16. Use according to any one of claims 9 to 15, wherein the fiber element is selected from the group consisting of MDF board, HDF board, OSB board, chipboard, plywood, and solid wood.

17. Use, in the finishing of a lignocellulose fiber element for external use, of an essentially water-free primer for a waterborne coating layer.
